# EUROPEAN PATENT SPECIFICATION

(11) **EP 1 835 768 B1**
(45) Date of publication and mention of the grant of the patent: **05.06.2013**
(21) Application number: 04802500.1
(22) Date of filing: 21.12.2004
(51) Int. Cl.: H04W 4/18, H04L 12/58, H04W 12/06

(54) **ADAPTATION METHOD OF TRANSFERRING MULTIMEDIA MESSAGE BETWEEN TERMINALS**
ANPASSUNGSVERFAHREN ZUM TRANSFER VON MULTIMEDIA-NACHRICHTEN ZWISCHEN ENDGERÄTEN
PROCEDE D'ADAPTATION DESTINE A LA TRANSMISSION D'UN MESSAGE MULTIMEDIA ENTRE DES TERMINAUX

(43) Date of publication of application: 19.09.2007
(73) Proprietor: ZTE Corporation, 518057 Shenzhen, Guangdong (CN)
(72) Inventor: WU, Chaoliang,, Shenzen City Guangdong Province 518057 (CN); YE, Yuwen,, Shenzen City Guangdong Province 518057 (CN); ZHANG, Zaijun,, Shenzen City Guangdong Province 518057 (CN); WANG Jingxiang,, Shenzen City Guangdong Province 518057 (CN); MU, Zhichun,, Shenzen City Guangdong Province 518057 (CN)
(74) Representative: Schröer, Gernot H.
(86) International application number: PCT/CN2004/001487
(87) International publication number: WO 2006/066450

(56) References cited:
- WO-A-03/079637
- WO-A-03/079641
- WO-A2-03/026138
- CN-A- 1 407 820
- DE-A1- 10 142 270
- "Digital cellular telecommunications system (Phase 2+); Universal Mobile Telecommunications System (UMTS); Multimedia Messaging Service (MMS); Functional description; Stage 2 (3GPP TS 23.140 version 5.11.0 Release 5); ETSI TS 123 140" ETSI STANDARDS, LIS, SOPHIA ANTIPOLIS CEDEX, FRANCE, vol. 3-T2, no. V5.11.0, 1 June 2004 (2004-06-01), XP014016476 ISSN: 0000-0001

## Description

### Technical Field

The present invention relates to an adaptation method of transferring multimedia message between terminals, and more specifically, to an adaptation method of transferring multimedia message service (MMS) between terminals with various specifications in mobile communication system.

### Background Art

The establishment of industrial standards for MMS makes it feasible to design MMS to operate in the upper layer of the WAP protocol without limitation to transmission format, namely, it supports not only circuit-switched data format but also general packet radio service (GPRS) format.

MMS (also referred to as color message service) is a mobile communication service which is developing rapidly. Nowadays, many manufacturers have designed and produced a large amount of mobile terminals, i.e. color message cell phone, which are with various models and having MMS receiving and sending functions. This kind of mobile terminal can transfer MMS between each other, and meanwhile also can exchange MMS with fixed terminals or SP servers by the network carrying communications.

However, there exists some compatibility problems as the foregoing mobile terminals (i.e. MMS phones (or called MMS terminals)) are produced by various manufacturers who have no uniform MMS packaging method, and the differences between the terminals of various models (including fixed terminals) are neglected by the current MMS center(MMSC), leading to the result that some MMS terminals can not properly access MMS sent by other MMS terminals of different models.

Since the development of MMS, different kinds of MMS terminals also support many other media formats besides the basic format. The basic protocol specified in MMS Conformance protocol includes static images (JPEG, WBMP, GIF); only limited styles such as AMR, IMY in audio and voice. From point of the practical application, there are diverse media forms of the user terminals, even for terminals of the same brand, the supporting media forms of MMS differs greatly among different models or styles. For major terminals, the unidentified media forms in MMS will not affect the identification of other media forms, yet for some poorly designed terminals, the unsupported media forms may even affect the identification of normal media forms. Thus satisfaction of the users decreases dramatically.

The compatibility problems existing between different MMS terminals are mainly manifested in the following aspects.
The media formats supported by different MMS terminals do not match. Different MMS terminals support MMS of different size, and MMS terminal will discard the MMS beyond its maximum receivable size, which will affect the MMS receiving.

The maximum color bits supported by MMS terminals with different screen size are always different, therefore, display problem appears. Also, different audio playing methods may lead to the result that the audio file in the received MMS can not be smoothly played or reproduced with the original rhythm, timbre, etc..

MMS content may be packaged by some MMS terminals without following MMS Conformance protocol, which will cause some abnormal phenomena in the MMS terminal of the receiver when displaying.

WO 03/079637 A ((ERICSSON INC [US]) 25 September 2003 ), discloses method, apparatus and system for reformatting a multimedia message for delivery to a terminal during connectionless communications.

"Digital cellular telecommunications system (Phase 2+); Universal Mobile Telecommunications System (UMTS); Multimedia Messaging Service (MMS); Functional description; Stage 2 (3GPP TS 23.140 version 5.11.0 Release 5); ETSI TS 123140" ETSI STANDARDS, LIS, SOPHIA ANTIPOLIS CEDEX, FRANCE, vol. 3-T2, no. V5.11.0, 1 June 2004, defines the stage 2 and stage 3 description of the non-realtime Multimedia Messaging Service, MMS.

WO 03/079641 A ((ERICSSON INC [US]) 25 September 2003 ), discloses method, apparatus and system for providing multimedia message to incompatible terminals.

### Summary of the Invention

The object of the present invention is to provide an adaptation method of transferring multimedia message between terminals to solve the compatibility problems existing in different terminals. On the basis of full understanding WAP protocol, with respect to differences of different MMS terminals when processing MMS protocols, the adaptation method provides a universal format with which to uniformly package the MMS from terminal to terminal, and from Email and external server to terminal, therefore, to solve the compatibility problems between MMS terminals.

In order to achieve the above object, the present invention applies an adaptation method of transferring media message between terminals, which includes the following steps:

In step 1, after a multimedia message service center receiving a multimedia message service from a sending terminal, confirming authentication of the sending terminal firstly by said multimedia message service center, analyzing content of said multimedia message service by said multimedia message service center if the terminal has the authentication, and saving multimedia message service control information and multimedia message service content information obtained by the analysis in said multimedia message service center respectively; otherwise, directly jumping to step 5;

In step 2, confirming the authentication of said receiving terminal before sending said notification message by said multimedia message service center, and sending said notification message to said receiving terminal if the authentication result is positive, otherwise, directly jumping to step 5;

In step 3, after said receiving terminal receiving said notification message, sending an access request to said multimedia message service center by said receiving terminal; extracting said multimedia message service control information and multimedia message service content information, and repackaging said multimedia message service according to the specification and packaging format of said receiving terminal by said multimedia message service center;

In step 4, encoding the forgoing repackaged multimedia message service and distributing the multimedia message service to said receiving terminal by said multimedia message service center; and

In step 5, ending process of transferring media message between terminals.

From the technical scheme mentioned above, it can be seen that by uniform repackaging, the present invention solves the compatibility problems of various MMS terminals, such as display difference, MMS content losing, rhythm, tone color distortion, etc., resulted from the differences in supporting media format for various terminals, and makes MMS capable of being transparently transmitted between various terminals without effected by display. In the process of uniformly adapting the MMS content, the present invention can terminate MMS for unauthenticated user by performing authentication confirmation.

In addition, by applying uniform adapting and repackaging, there is no need to deal with each MMS terminal when designing MMSC, which substantially simplifies the design of encoding-decoding of MMSC.

In the following, the present invention will be described in further detail with reference to the accompanying drawings.

### Brief Description of Drawings

Figure 1 is an illustration of the structure of communication system to which the present invention relates.
Figure 2 is a flow chart of a preferred embodiment offered by the present invention.

### Preferred Embodiment of the Present Invention

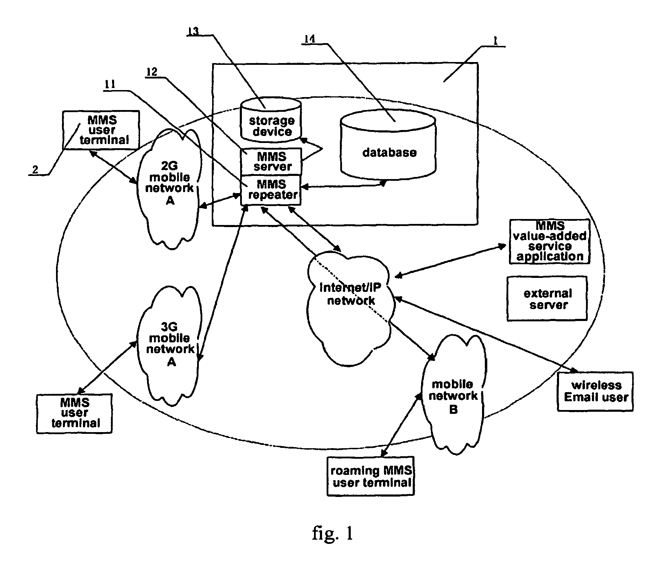

Figure 1 is an illustration of the structure of communication system to which the present invention relates. In Figure 1, MMSC 1 (multimedia message service center) includes a MMS repeater 11 and a MMS server 12, wherein, the MMS repeater 11 includes a MMS carrying module, and the MMS server 12 includes a service processing module, and these modules are responsible for all service processing of MMS.

It can be seen from Figure 1 that, independent of carrier network, MMSO 1 is suitable for the current GPRS network and future 3G network. Moreover, MMSC 1 also includes a storage device 13 and a database 14. The storage device 13 stores all MMS messages submitted by the user, and the database 14 saves associated information of all MMS account users.

The implementation of the present invention is: MMS terminal starts sending MMS after it has edited a MMS using a MMS editor and filled the address of the addressee. MMS is redirected to a specific MMSC through the centralized redirector and WAP gateway of the network. The MMS control header and content are packaged according to WAP, WSP and WAP 209 protocols, and MMSC un-packages them according to the protocols. After that, MMSC encodes and distributes the notification message to the receiving terminal, the receiving terminal analyzes the notification and sends access request. The MMSC distributes the associated code stream to the receiving terminal.

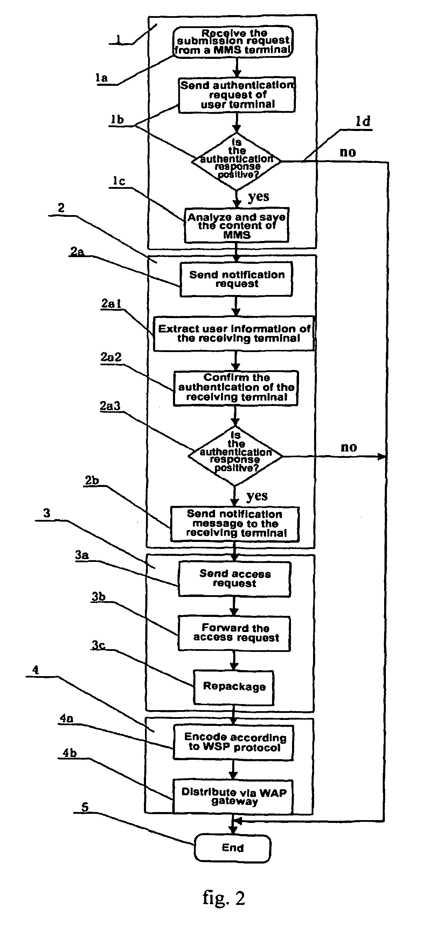

The preferred embodiment of adaptation process offered in the present invention is shown as Figure 2, which includes the following steps:
In step 1, after receiving the submission request from a MMS sending terminal, a MMSC performs operations including authentication confirming, content analyzing, and the specific process is as follows:
   In step 1a, the carrying module of said MMSC receives the submission request from said MMS sending terminal, and transfers the request to the service processing module of said MMSC;
   In step 1b, said service processing module sends authentication request of authentication about said MMS sending terminal to database server service processing module of said MMSC; if the authentication response from said database server service processing module is "yes", then implement step 1c; otherwise, step 1d;
   In step 1c, said service processing module analyzes said MMS, that is, saves the MMS control information obtained by the analysis into the database of said MMSC, saves the MMS content information obtained by the analysis into storage devices of said MMSC; then goes to step 2;
   In step 1d, said service processing module sends a message saying submission response error to said MMS sending terminal via said carrying module, and directly jump to said step 5;
Step 2: the MMSC performs the operation of sending notification message to the receiving terminal, and the specific process is as follows:
   In step 2a, said service processing module sends a notification request to said database server service processing module;
   In step 2b, after receiving response of the notification request from said database server service processing module, said service processing module sends notification message to said receiving terminal.

In the case that only the receiving terminal that pre-applied MMS service can access MMS, the database server service processing module must perform authentication for the receiving terminal before feeding back the notification request, and the corresponding process is as follows:
In step 2a1, said database server service processing module extracts the associated user information of said receiving terminal;
In step 2a2, said associated user information and user information stored in said database server are compared for authentication, and the authentication response is sent;
In step 2a3, if said authentication response is "yes", send said notification message; otherwise, send responding error information to the wrong receiving terminal and directly jump to said step 5.

In the above step 2a3, since MMS may be sent to more than one receive-ing terminal, such as group sending by separated sending terminal or SP server, some receiving terminals may have no authority to enjoy MMS, therefore, for those who have not authority to enjoy MMS, MMSC sends responding error information to the service processing module. After said notification message is send out, MMSC performs step 3.
In step 3, the receiving terminal sends access request message to the MMSC; MMSC extracts MMS control information and MMS content information, and repackages said MMS according to specification and packaging format of said receiving terminal. The specific steps performed in this process are:
In step 3a, after obtaining the notification message, the receiving terminal sends access request to a MMSC, and the access request includes the information about the specification and packaging format of the receiving terminal;
In step 3b, the carrying module of the MMSC forwards the access request to the service module of the MMSC;
In step 3c, the service module sends the request of extracting information to the database server service processing module of MMSC, and after obtaining the response to the request of extracting information returned by said database server service processing module, the service module extracts MMS control information and MMS content information, and repackages said MMS according to the specification and packaging format of said receiving terminal. After the MMS is repackaged, MMSC needs to perform step 4 to distribute the MMS.

In step 4, after encoding the foregoing repackaged MMS, MMSC distributes the MMS to the receiving terminal; the method of repackaging and the process of distributing are as follows:
In step 4a, the repackaged MMS is encoded according to WSP protocol;
In step 4b, the MMS encoded according to WSP protocol is distributed to the terminal user via the WAP gateway.

Finally, in step 5, the process is ended by the MMS transparently transmitting between different MMS terminals.

In the service of content adaptation, the present invention is able to support conversation between most media forms, and can correctly display and analyze no matter what the target terminal is, therefore the users' satisfaction increases. The specific adaptation and the obtained effect are described in the following.

The conversation of media size:
If the size of the MMS sent by the sender surpasses maximum MMS capacity capable of being received by the receiver, a problem of receiving MMS will occur. Nowadays, most MMS terminals decline to receive the MMS whose size surpasses their receiving capacity. But minor terminals poorly designed will break down and reset under this condition. The present invention can avoid the over-sized MMS content (by compressing or cutting), and thus enhances users' satisfaction.

The uniform packaging of the media content:
Nowadays, the lack of a uniform packaging protocol for 3GPP or OMA to package the MMS content sent by MMS terminal brings an obstacle for the terminals to send and receive MMS between each other. The present invention provides a uniform packaging format on the basis of MMS Conformance to perform uniform packaging conversion for the MMS sent from terminal to terminal or from MMS service content provider to terminal. The conversion mainly has the following aspects:
   Content-Type in the control header of MMS for most present MMS generally falls into two types: application/vnd.wap.multipart.related and application/vnd.wap.multipart -.mixed. Minor terminals may fill here with different content-type other than the two types above, while most terminals support only these two types, which brings display compatibility problem between terminals. The present invention converts the content-type of all MMS submitted by users into two types,
   application/vnd.wap.multipart.related and application/vnd.wap.multipart .mixed, when distributing to the target terminal, thus avoids the compatibility problem resulted from the design difference between terminals.

Different terminals are different in packaging the concrete content of MMS. In the case of MMS with Content-Type of application/vnd.wap.multipart.related, the packaging form for the concrete content of MMS is MIME: each section generally consists of three elements of FileName, Content-ID and Content-Location. Considering the design difference, some terminals may have all the three elements above, while others may not, then the compatibility problem between the terminals appears. For the case of terminal to terminal, the present invention applies uniform packaging at the terminal to ensure that the header of each section includes all the foregoing three elements, thus avoiding the compatibility problem between terminals caused by design difference.

For the processing of the content in MMS SMIL, MMS SMIL is a key part of MMS to control the display of MMS, now the versions of SMIL supported by various MMS terminals are greatly different. The latest SMIL is version 2.0, whereas the versions of SMIL supported by the terminals are greatly different, some terminals don't support some SMIL elements, some are sensitive to the location of SMIL, and some other terminals cannot analyze this SMIL at all. The method applied by present invention is to apply SMIL adaptation to various MMS terminals to guarantee the display of MMS free from the effect of the packaging of SMIL.

For the processing of the text in MMS, today's MMS terminals differ in supporting the character set of the text. Most terminals only support one or two character sets, yet some advanced terminals can support several character sets, which may result in the problem that when terminal A sends MMS to terminal B, terminal B may display incorrect text code or fail to display at all. The present invention performs adaptation to the character sets of the text for each MMS terminal when distributing MMS to the target terminal to avoid the incorrect codes resulted from text compatibility of MMS terminals.

For the processing of the title length of the terminals, MMS terminals differ in supporting title length, regardless of the definite prescription in MMS Conformance. Moreover, if the receiving terminal does not support the character set used in the title, it is possible that the receiving terminal may fail to get the notification message. In the present invention, uniform UTF-8 is used to encode the title, and flexible adaptation is applied for the title length to ensure the title is correct between each terminal.

## Claims

1. An adaptation method of transferring media message between terminals, **characterized in that** the method includes the following steps of:
step 1, after a multimedia message service center receiving a multimedia message service from a sending terminal, confirming authentication of the sending terminal firstly by said multimedia message service center, analyzing content of said multimedia message service by said multimedia message service center if the terminal has the authentication, and saving multimedia message service control information and multimedia message service content information obtained by the analysis in said multimedia message service center respectively; otherwise, directly jumping to step 5;
step 2, confirming the authentication of said receiving terminal before sending said notification message by said multimedia message service center, and sending said notification message to said receiving terminal if the authentication result is positive, otherwise, directly jumping to step 5;
step 3, after said receiving terminal receiving said notification message, sending an access request to said multimedia message service center by said receiving terminal; extracting said multimedia message service control information and multimedia message service content information, and repackaging said multimedia message service according to the specification and packaging format of said receiving terminal by said multimedia message service center;
step 4, encoding the forgoing repackaged multimedia message service and distributing the multimedia message service to said receiving terminal by said multimedia message service center; and
step 5, ending process of transferring media message between terminals.

2. The adaptation method of transferring media message between terminals according to claim 1, **characterized in that**: said procedure of authentication confirmation in step 1 includes the following specific steps of:
step 1a, receiving, by the carrying module of said multimedia message service center, a submission request from said sending terminal of multimedia message service, and transferring the request to a service processing module of said multimedia message service center by the carrying module of said multimedia message service center;
step 1b, sending an authentication request for said sending terminal of multimedia message service to a database server service processing module of said multimedia message service center by said service processing module; then performing step 1c if the authentication response from said database server service processing module is "yes", otherwise, performing step 1d;
step 1c, analyzing, by said service processing module, content of said multimedia message service, and saving the multimedia message service control information obtained by the analysis into a database of said multimedia message service center by said service processing module; saving the multimedia message service content information obtained by the analysis into a storage device of the multimedia message service center; and
step 1d, sending a message of error response to said sending terminal via said carrying module by said service processing module, and directly jumping to said step 5.

3. The adaptation method of transferring media message between terminals according to claim 1, **characterized in that**: the specific process of sending said notification message in step 2 is:
step 2a, sending the notification request to said database server service processing module by said service processing module; and
step 2b, sending the notification message to said receiving terminal by said service processing module after receiving response of notification request from said database server service processing module.

4. The adaptation method of transferring media message between terminals according to claim 1, **characterized in that**: the specific process of confirming the authentication of said receiving terminal in said step 2 is:
step 2a1, extracting associated user information of said receiving terminal by said database server service processing module;
step 2a2, comparing authentication of said associated user information and user information stored in said database server, and sending the authentication response to said service processing module; and
step 2a3, sending said notification message by said service processing module if said authentication response is "yes"; otherwise, sending the message of error response to wrong receiving terminals and directly jumping to said step 5.

5. The adaptation method of transferring media message between terminals according to claim 1, **characterized in that**: said step 3 specifically is:
step 3a, sending the access request to the multimedia message service center by the receiving terminal after obtaining the notification message, wherein the access request includes information about specification and packaging format of the receiving terminal;
step 3b, forwarding the access request to a service module of the multimedia message service center by the carrying module of the multimedia message service center; and
step 3c, sending an request of extracting information to the database server service processing module of said multimedia message service center by said service module, and extracting said multimedia message service control information and multimedia message service content information, and repackaging said multimedia message service according to specification and packaging format of said receiving terminal by said service module after obtaining a response to the request of extracting information returned by said database server service processing module.

6. The adaptation method of transferring media message between terminals according to claim 1, **characterized in that**: said step 4 includes the following specific steps of:
step 4a, encoding the repackaged multimedia message service according to WSP protocol; and
step 4b, distributing the multimedia message service encoded according to WSP protocol to a terminal user via a WAP gateway.

## Patentansprüche

1. Anpassungsverfahren zum Transfer von Multimedia-Nachrichten zwischen Endgeräten, **dadurch gekennzeichnet, dass** das Verfahren die folgenden Schritte enthält:
Schritt 1 - nach dem Empfangen eines Multimedia-Nachrichtendienstes von einem Sende-Endgerät in einer Multimedia-Nachrichten-Dienstzentrale Bestätigen der Authentifizierung des sendenden Endgeräts erstmals durch die Multimedia-Nachrichten-Dienstzentrale, Analysieren des Inhalts des Multimedia-Nachrichtendienstes durch die Multimedia-Nachrichten-Dienstzentrale, wenn das Endgerät die Authentifizierung besitzt, und Abspeichern einer Steuerinformation für den Multimedia-Nachrichtendienst und der Information über den Inhalt des Multimedia-Nachrichtendienstes, der durch die Analyse in der Multimedia-Nachrichten-Dienstzentrale jeweils erhalten wurde; ansonsten direkter Sprung zu Schritt 5;
Schritt 2 - Bestätigen der Authentifizierung des empfangenden Endgeräts vor dem Absenden der Benachrichtigungsmeldung durch die Multimedia-Nachrichten-Dienstzentrale und Absenden der Benachrichtigungsmeldung an das empfangende Endgerät, wenn das Ergebnis der Authentifizierung positiv ist; ansonsten direkter Sprung zu Schritt 5;
Schritt 3 - nach dem Empfangen der Benachrichtigungsmeldung durch das empfangende Endgerät Absenden einer Zugangsanforderung an die Multimedia-Nachrichten-Dienstzentrale durch das empfangende Endgerät; Extrahieren der Steuerinformation des Multimedia-Nachrichtendienstes und der Information über den Inhalt des Multimedia-Nachrichtendienstes, und erneute Paketbildung des Multimedia-Nachrichtendienstes entsprechend der Spezifikation und dem Paketierungsformat des empfangenden Endgeräts durch die Multimedia-Nachrichten-Dienstzentrale;
Schritt 4 - Kodieren des vorgenannten neu paketierten Multimedia-Nachrichtendienstes und Zusendung des Multimedia-Nachrichtendienstes an das empfangende Endgerät durch die Multimedia-Nachrichten-Dienstzentrale; und
Schritt 5 - Beenden des Vorgangs für die Übermittlung von Multimedia-Nachrichten zwischen Endgeräten.

2. Anpassungsverfahren zum Transfer von Multimedia-Nachrichten zwischen Endgeräten nach Anspruch 1, **dadurch gekennzeichnet, dass**: der Ablauf zur Bestätigung der Authentifizierung in Schritt 1 die folgenden speziellen Schritte aufweist:
Schritt 1a - Empfangen einer Zusendeanfrage von dem sendenden Endgerät des Multimedia-Nachrichtendienstes durch das Trägermodul der Multimedia-Nachrichten-Dienstzentrale und Übertragung der Anfrage an ein Modul zur Dienstverarbeitung der Multimedia-Nachrichten-Dienstzentrale durch das Trägermodul der Multimedia-Nachrichten-Dienstzentrale;
Schritt 1b - Absenden einer Authentifizierungs-Anfrage für das sendende Endgerät des Multimedia-Nachrichtendienstes an ein Modul zur Dienstbearbeitung in einem Datenbank-Server der Multimedia-Nachrichten-Dienstzentrale durch das Dienstbearbeitungs-Modul; anschließend Ausführung von Schritt 1c, falls die Authentifizierungs-Antwort von dem Modul zur Dienstbearbeitung in einem Datenbank-Server "JA" lautet, ansonsten Ausführung von Schritt 1d;
Schritt 1c - Analysieren des Inhalts des Multimedia-Nachrichtendienstes durch das Dienstbearbeitungs-Modul und Abspeichern der Steuerinformationen des Multimedia-Nachrichtendienstes, die durch die Analyse erhalten wurden, in einer Datenbank der Multimedia-Nachrichten-Dienstzentrale durch das Dienstbearbeitungs-Modul; Abspeichern der durch die Analyse erhaltenen Inhaltsinformationen des Multimedia-Nachrichtendienstes in einer Speichervorrichtung der Multimedia-Nachrichten-Dienstzentrale; und
Schritt 1d - Absenden einer Nachricht mit Fehlerreaktion an das sendende Endgerät über das Trägermodul durch das Dienstbearbeitungsmodul und direkter Sprung zu Schritt 5.

3. Anpassungsverfahren zum Transfer von Multimedia-Nachrichten zwischen Endgeräten nach Anspruch 1, **dadurch gekennzeichnet, dass** der spezielle Vorgang zum Absenden der Benachrichtigungsmeldung in Schritt 2 wie folgt abläuft:
Schritt 2a - Absenden der Benachrichtigungs-Anforderung an das Dienstbearbeitungsmodul des Datenbank-Servers durch das Dienstbearbeitungsmodul; und
Schritt 2b - Absenden der Benachrichtigungsmeldung an das empfangende Endgerät durch das Dienstbearbeitungsmodul nach Erhalt der Antwort auf die Benachrichtigungs-Anforderung von dem Dienstbearbeitungs-Modul des Datenbank-Servers.

4. Anpassungsverfahren zum Transfer von Multimedia-Nachrichten zwischen Endgeräten nach Anspruch **dadurch gekennzeichnet, dass** der spezielle Vorgang zur Bestätigung der Authentifizierung des empfangenden Endgeräts in Schritt 2 wie folgt abläuft:
Schritt 2a1 - Extrahieren der zugeordneten Benutzerinformationen des empfangenden Endgeräts durch das Dienstbearbeitungsmodul des Datenbank-Servers;
Schritt 2a2 - Vergleichen der Authentifizierung der zugeordneten Benutzerinformationen und der in dem Datenbank-Server abgespeicherten Benutzerinformationen und Absenden der Authentifizierungs-Antwort an das Dienstbearbeitungsmodul; und
Schritt 2a3 - Absenden der Benachrichtigungsmeldung durch das Dienstbearbeitungsmodul, wenn die Authentifizierungsantwort "JA" lautet; ansonsten Absenden der Meldung einer Fehlerreaktion an falsche empfangende Endgeräte und direkter Sprung zu Schritt 5.

5. Anpassungsverfahren zum Transfer von Multimedia-Nachrichten zwischen Endgeräten nach Anspruch 1, **dadurch gekennzeichnet, dass** der Schritt 3 im Einzelnen wie folgt abläuft:
Schritt 3a - Absenden der Zugangsanforderung an die Multimedia-Nachrichten-Dienstzentrale durch das empfangende Endgerät nach dem Erhalten der Benachrichtigungsmeldung, wobei die Zugangsanforderung Informationen über die Spezifikation und das Paketierungsformat des empfangenden Endgeräts enthält;
Schritt 3b - Weiterleiten der Zugangsanforderung an ein Dienstmodul der Multimedia-Nachrichten-Dienstzentrale durch das Trägermodul der Multimedia-Nachrichten-Dienstzentrale; und
Schritt 3c - Absenden einer Anforderung zum Extrahieren von Informationen an das Dienstbearbeitungsmodul im Datenbank-Server der Multimedia-Nachrichten-Dienstzentrale durch das Dienstmodul, und Extrahieren der Steuerinformationen des Multimedia-Nachrichtendienstes und der Informationen über den Inhalt des Multimedia-Nachrichtendienstes, und erneute Paketbildung des Multimedia-Nachrichtendienstes entsprechend der Spezifikation und des Paketierungsformats des empfangenden Endgeräts durch das Dienstmodul nach dem Erhalt einer Antwort auf die Anforderung zum Extrahieren der Informationen, die von dem Dienstbearbeitungsmodul in dem Datenbank-Server zurückgesandt wurde.

6. Anpassungsverfahren zum Transfer von Multimedia-Nachrichten zwischen Endgeräten nach Anspruch 1, **dadurch gekennzeichnet, dass** der Schritt 4 die folgenden speziellen Einzelschritte aufweist:
Schritt 4a - Kodieren des neu paketierten Multimedia-Nachrichtendienstes gemäß WSP-Protokoll; und
Schritt 4b - Abgabe des gemäß WSP-Protokoll kodierten Multimedia-Nachrichtendienstes an einen Endgerätebenutzer über einen WAP-Netzübergang.

## Revendications

1. Procédé d'adaptation destiné à la transmission d'un message multimédia entre des terminaux, **caractérisé en ce que** le procédé comprend les étapes ci-dessous consistant à :
étape 1, suite à la réception, par un centre de service de messages multimédias, d'un service de messages multimédias en provenance d'un terminal émetteur, confirmer l'authentification du terminal émetteur, dans un premier temps, par ledit centre de service de messages multimédias, analyser le contenu dudit service de messages multimédias par le biais dudit centre de service de messages multimédias, si le terminal présente l'authentification, et enregistrer des informations de commande de service de messages multimédias et des informations de contenu de service de messages multimédias obtenues par l'analyse dans ledit centre de service de messages multimédias, respectivement ; sinon, passer directement à l'étape 5 ;
étape 2, confirmer l'authentification dudit terminal récepteur avant d'envoyer ledit message de notification par le biais dudit centre de service de messages multimédias, et envoyer ledit message de notification audit terminal récepteur si le résultat d'authentification est positif, sinon, passer directement à l'étape 5 ;
étape 3, suite à la réception dudit message de notification par ledit terminal récepteur, envoyer une demande d'accès audit centre de service de messages multimédias, par le biais dudit terminal récepteur ; extraire lesdites informations de commande de service de messages multimédias et lesdites informations de contenu de service de messages multimédias, et emballer à nouveau ledit service de messages multimédias selon la spécification et le format d'emballage dudit terminal récepteur, par le biais dudit centre de service de messages multimédias ;
étape 4, coder le service de messages multimédias réemballé précèdent et distribuer le service de messages multimédias audit terminal récepteur, par le biais dudit centre de service de messages multimédias ; et
étape 5, mettre fin au processus de transmission d'un message multimédia entre des terminaux.

2. Procédé d'adaptation destiné à la transmission d'un message multimédia entre des terminaux selon la revendication 1, **caractérisé en ce que** : ladite procédure de confirmation d'authentification mise en oeuvre à l'étape 1 comprend les étapes spécifiques ci-dessous consistant à :
étape 1a, recevoir, par le biais du module de transport dudit centre de service de messages multimédias, une demande de soumission en provenance dudit terminal émetteur du service de messages multimédias, et transférer la demande à un module de traitement de service dudit centre de service de messages multimédias, par le biais du module de transport dudit centre de service de messages multimédias ;
étape 1b, envoyer une demande d'authentification pour ledit terminal émetteur du service de messages multimédias, à un module de traitement de service de serveur de base de données dudit centre de service de messages multimédias, par le biais dudit module de traitement de service ; mettre ensuite en oeuvre l'étape 1c si la réponse d'authentification en provenance dudit module de traitement de service de serveur de base de données est « oui » ; sinon, mettre en oeuvre l'étape 1d ;
étape 1c, analyser, par le biais dudit module de traitement de service, le contenu dudit service de messages multimédias, et enregistrer les informations de commande de service de messages multimédias obtenues au cours de l'analyse, dans une base de données dudit centre de service de messages multimédias, par le biais dudit module de traitement de service ; enregistrer les informations de contenu de service de messages multimédias obtenues au cours de l'analyse, dans un dispositif de stockage du centre de service de messages multimédias ; et
étape 1d, envoyer un message de réponse d'erreur audit terminal émetteur, par l'intermédiaire dudit module de transport, par ledit module de traitement de service, et passer directement à l'étape 5.

3. Procédé d'adaptation destiné à la transmission d'un message multimédia entre des terminaux selon la revendication 1, **caractérisé en ce que** : le processus spécifique d'envoi dudit message de notification mis en oeuvre à l'étape 2 consiste à :
étape 2a, envoyer la demande de notification audit module de traitement de service de serveur de base de données, par le biais dudit module de traitement de service ; et
étape 2b, envoyer le message de notification audit terminal récepteur, par le biais dudit module de traitement de service, suite à la réception d'une réponse de demande de notification à partir dudit module de traitement de service de serveur de base de données.

4. Procédé d'adaptation destiné à la transmission d'un message multimédia entre des terminaux selon la revendication 1, **caractérisé en ce que** : le processus spécifique de confirmation de l'authentification dudit terminal récepteur à ladite étape 2 consiste à :
étape 2a1, extraire des informations d'utilisateur associées dudit terminal récepteur, par le biais dudit module de traitement de service de serveur de base de données ;
étape 2a2, comparer l'authentification desdites informations d'utilisateur associées et des informations d'utilisateur stockées dans ledit serveur de base de données, et envoyer la réponse d'authentification audit module de traitement de service ; et
étape 2a3, envoyer ledit message de notification, par le biais dudit module de traitement de service, si ladite réponse d'authentification est « oui » ; sinon, envoyer le message de réponse d'erreur à des terminaux récepteurs erronés et passer directement à l'étape 5.

5. Procédé d'adaptation destiné à la transmission d'un message multimédia entre des terminaux selon la revendication 1, **caractérisé en ce que** : ladite étape 3 consiste spécifiquement à :
étape 3a, envoyer la demande d'accès au centre de service de messages multimédias, par le biais du terminal récepteur, suite à l'obtention du message de notification, dans laquelle la demande d'accès inclut des informations sur la spécification et le format d'emballage du terminal récepteur ;
étape 3b, acheminer la demande d'accès à un module de service du centre de service de messages multimédias, par le biais du module de transport du centre de service de messages multimédias ; et
étape 3c, envoyer une demande d'extraction d'informations au module de traitement de service de serveur de base de données dudit centre de service de messages multimédias, par le biais dudit module de service, et extraire lesdites informations de commande de service de messages multimédias et lesdites informations de contenu de service de messages multimédias, et emballer à nouveau ledit service de messages multimédias selon la spécification et le format d'emballage dudit terminal récepteur, par le biais dudit module de service, suite à l'obtention d'une réponse à la demande d'extraction d'informations renvoyée par ledit module de traitement de service de serveur de base de données.

6. Procédé d'adaptation destiné à la transmission d'un message multimédia entre des terminaux selon la revendication 1, **caractérisé en ce que** : ladite étape 4 comprend les étapes spécifiques ci-dessous consistant à :
étape 4a, coder le service de messages multimédias réemballé selon le protocole WSP ; et
étape 4b, distribuer le service de messages multimédias codé selon le protocole WSP, à un terminal d'utilisateur, par l'intermédiaire d'une passerelle WAP.
